# EUROPEAN PATENT SPECIFICATION

(11) **EP 3 717 837 B1**
(45) Date of publication and mention of the grant of the patent: **19.02.2025**
(21) Application number: 18829985.3
(22) Date of filing: 28.11.2018
(51) Int. Cl.: F24F 5/00, F24H 6/00, F24D 5/08, F24D 12/02, F24D 3/18

(54) **HYBRID AMBIENT-AIR CONDITIONING FOR CIVIL OR INDUSTRIAL USE**
HYBRID-KLIMAANLAGE FÜR ZIVIL- ODER INDUSTRIELLE UMGEBUNG
INSTALLATION HYBRIDE DE CLIMATISATION POUR ENVIRONNEMENTS CIVILS OU INDUSTRIELS

(30) Priority: 28.11.2017 IT 201700136567
(43) Date of publication of application: 07.10.2020
(73) Proprietor: Officine Termotecniche Fraccaro O.T.F. S.r.l., 31033 Castelfranco Veneto (TV) (IT)
(72) Inventor: FRACCARO, Gimmi, 31033 Castelfranco Veneto (TV) (IT)
(74) Representative: Maroscia, Antonio
(86) International application number: PCT/IB2018/059403
(87) International publication number: WO 2019/106560

(56) References cited:
- EP-A1- 2 937 644
- EP-A1- 3 214 377
- WO-A1-83/03662
- DE-U1- 202013 010 117
- JP-B2- 5 580 658
- JP-B2- 5 580 658
- US-A- 4 409 796

## Description

### Field of the invention

**The** present invention generally finds application in the field of ambient heating and cooling and particularly relates to a hybrid ambient-air conditioning plant for civil or industrial use.

### Background art

Heating plants have been long known, which comprise a thermal device having a burner connected to at least one closed loop for heating an environment by radiation.

The burner is generally adapted to generate heat by combustion of a fuel-air mixture for heating a working fluid circulated in the heating circuit. In addition, the burner is connected to a chimney which is adapted to filter and the combustion products into the atmosphere.

Nevertheless, this kind of plant has a relatively low efficiency, as the latter depends on the calorific value of the fuel-air mixture, and does not allow recovery of the sensible and latent heat of combustion products.

Some of these plants include, as is well known, one or more heat pumps instead of thermal devices with a burner for ambient heating.

Nevertheless, in this configuration the heat pumps have the drawback of having a low performance coefficient during periods of the year in which external temperatures are lower.

Furthermore, a further drawback is the thermal stratification created by heat pumps when the environments to be heated have a remarkably high ceiling, such as in industrial environments.

This drawback requires plants to be particularly complex and oversized for efficient heating of the environment even at people's level.

In an attempt to at least partially obviate this drawback, heating plants have been developed which comprise devices that are able to recover sensible and latent heat from the combustion products and reintroduce it into the environment and heat-radiating devices that afford uniform heating of the environment.

EP2486330 discloses a heating plant which comprises a condenser having a chimney for recovering sensible and latent heat from the combustion products by means of a secondary fluid, and later introducing it into the environment.

In addition, the plant comprises a first heat-radiating thermal device located inside the environment and connected to a burner and a second thermal device in fluid communication with the condenser to receive the hot secondary fluid, and also placed inside the environment to heat it in combination with the first thermal device.

A first drawback of this arrangement is that this plant can only partially increase heating efficiency.

A further drawback of this arrangement is that the burner only uses non-renewable energy sources, in particular for supplying energy to the burner of the first heat-radiating thermal device.

A further drawback of this arrangement is that this plant cannot afford cooling the environment during the summer period.

WO8303662 refers to a "heating plant particularly intended for utilising additional heat from ambient atmosphere, especially during the summer", see page 1, lines 13-15. It comprises an electric heater intended to supply the heat normally demanded during the summer season. The heating plant comprises a heating boiler, a first and a second heat exchanger, a heat pump not reversible, for heating either the exhaust gases from the heating boiler or other heating fluids.

In addition, these hybrid plants comprise a device for recovering latent heat from the combustion products of the first thermal device and means for fluid connection configured for selective connection of the first or second thermal device with the heat pump for heating, in combination with the first thermal device.

A drawback of these known arrangements is that the first and second heating devices are placed in two distinct and separate environments to be heated, thereby decreasing heating effectiveness and efficiency.

A further drawback of these arrangements is that the first thermal device and the heat recovery device are situated inside the environment to be heated, which increases the risks associated with the introduction of hazardous materials, such as gas or fuels, into the environment, and combustion products that are harmful to the user.

### Technical Problem

In the light of the prior art, the technical problem addressed by the 5 present invention is to provide a hybrid ambient-air conditioning plant that selectively affords efficient and uniform heating of an environment during the winter and cooling of the same environment during the summer, while also utilising renewable energy sources.

### Disclosure of the invention

The object of the present invention is to obviate the above drawback, by providing a hybrid ambient-air conditioning plant that is highly efficient and relatively cost-effective.

A particular object of the present invention is to provide a plant as described hereinbefore that can ensure both heating and cooling of an indoor environment.

A further object of the present invention is to provide a plant as described hereinbefore that has a very high thermal efficiency.

Another object of the present invention is to provide a plant as described hereinbefore that can uniformly heat environments having high ceilings.

A further object of the present invention is to provide a plant as described hereinbefore, that can reduce the overall fossil fuel consumption, by also using renewable energy sources.

Another object of the present invention is to provide a plant as described above that is very simple to use and has low operation costs.

Yet another object of the present invention is to provide a plant as described hereinbefore that can reduce emissions of polluting gases into the atmosphere.

These and other objects, as more clearly explained hereinafter, are fulfilled by a hybrid ambient-air conditioning plant for civil or industrial use as defined in claim 1.

The arrangement defined in claim 1 affords efficient and uniform heating of an environment during the winter and cooling of the same environment during the summer.

In a preferred embodiment, the connection means comprise a first three-way valve which is adapted to connect either the first or the second secondary circuits to the inlet of the second thermal device, and a second three-way valve configured for connecting the first or the second secondary circuits to the outlet of the second thermal device.

In addition, the heat pump is adapted to be connected in series with the condenser and the second heating device and to be put in fluid communication with the first secondary circuit.

In a further embodiment, the connection means comprise one or more valves located in the first secondary circuit and configured to selectively connect the condenser and the heat pump when the latter is in the ambient heating mode.

Furthermore, the plant may comprise a heat accumulator in fluid communication with the first and the second secondary circuits and fluidically connected to the second thermal device for conveying the fluid accumulated, heated or cooled by the heat pump or heated by the condenser, toward the second thermal device.

Also, in another embodiment, the connection means comprise, for each secondary circuit, at least two two-way valves for selectively connecting the condenser and the heat pump with the accumulator.

Preferably, the heat pump is an air-to-water, water-to-water, air-to-air or water-to-air heat pump.

Advantageous embodiments of the invention are obtained in accordance with the dependent claims.

### Brief Description of The Drawings

Further features and advantages of the invention will be more apparent from the detailed description of a preferred, non-exclusive embodiment of an improved hybrid ambient air-conditioning plant, which is described as a nonlimiting example with the help of the annexed drawings, in which:
FIG. 1 is a schematic view of the plant according to a first embodiment, according to the invention;
FIG. 2 is a schematic view of the plant according to a second embodiment, not according to the invention;
FIG. 3 is a schematic view of the plant according to a third embodiment, according to the invention;
FIG. 4 is a schematic cross-sectional view of a detail of the inventive plant.

### Detailed description of a preferred exemplary embodiment

Particularly referring to the figures, there is shown a hybrid plant, generally designated by numeral 1, for ambient-air conditioning of an indoor environment, i.e. a medium-to-large civil environmentAor a high-volume industrial environment.

In a preferred embodiment of the invention, the plant 1 comprises at least one first thermal device 2 comprising a burner 3 for burning a fuel-air mixture, e.g. with methane, butane, propane or gasoil as fuels.

Namely, the burner 3 comprises a combustion chamber 4 with an inlet for the mixture and a discharge opening 5 for the products E generated by combustion of the mixture.

The combustion products E may have a predetermined combustion temperature, according to the type of mixture that is used in the burner 3.

Advantageously, the burner 3 may comprise one or more control devices, not shown, which may be operated by an operator to adjust the operating combustion conditions in the chamber 4.

Furthermore, the plant 1 comprises a closed circuit 6 containing a first working fluid F1 heated by the burner 3, which is composed of a first pipe 7 with a delivery branch 7' and a return branch 7".

**The** closed circuit 6 may be of radiant type, mounted to the ceiling of the environment A to heat it by radiation.

Furthermore, in an alternative configuration of the invention, not shown, the closed circuit 6 may comprise a plurality of inlet ports arranged along the entire pipe 7 which may comprise respective fans adapted to act, when needed, as destratification fans, and a fan gate or a similar element.

In a first configuration of the invention, the first working fluid F1 in the closed circuit 6 may be composed of combustion products E such as exhaust air and gases.

For example, the first working fluid F1 may be overheated and circulated under negative pressure in the closed circuit 6 directly connected to the burner 3 and can generate variable surface radiation temperatures, as needed. Namely, the surface temperatures may range from 100 cc to 400 cc.

Alternatively, the first thermal device 2 may comprise a steam generator, not shown, operably associated with the burner 3 and fluidically connected to the closed circuit 6.

In this arrangement, the first working fluid F1 may consist of the steam produced by the steam generator and the circuit 6 may be composed of a ceiling-, wall- or floor-mounted pipe 7 located in the environment A.

Furthermore, the plant 1 comprises a chimney 8 for ejecting the combustion products E of the burner 3, in fluid communication with the discharge opening 5 of the combustion chamber 4.

In addition, the chimney 8 comprises a condenser 9 for at least partial recovery of sensible and latent heat developed from evaporation of the combustion products E, which has a heat-exchange chamber 10.

The chimney 8 and the condenser 9 may be placed at the first thermal device 2 or at any point of the circuit 6 according to the optimization requirements associated with the extent, the geometry, the presence of junctions and the sealing conditions of the circuit 6.

As shown in the figures, the first thermal device 2 and the condenser 9 are placed outside the indoor environment A to be air-conditioned to avoid the risk of introducing fluid fuels and combustion products into the environment, which might be highly dangerous and hazardous for users.

The plant 1 comprises at least one second thermal device 11. In particular, the second thermal device 11 is adapted to ensure air conditioning of the environment A by convection or radiation and may comprise a box-like body 12 with an air-conditioning circuit 13 therein and means, not shown, for forced convection of outside air or water.

In certain preferred, non-exclusive embodiments of the invention, the second thermal device 11 may comprise one or more fan heaters, or one or more induction devices for channeled air distribution or alternatively one or more radiant strip heaters.

The condenser 9 comprises a first secondary circuit 14 containing a first secondary fluid F2 and operably connected to the second thermal device 11 for at least partially returning the recovered heat to the environment A by means of the first secondary fluid F2.

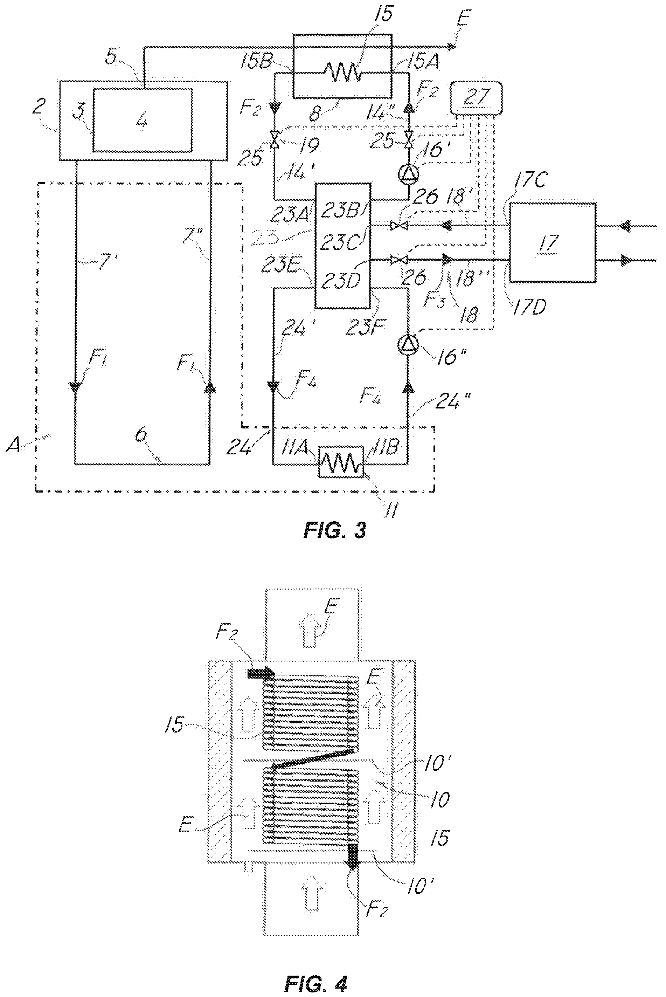

As shown in FIG. 4, the first secondary circuit 14 may comprise a second pipe 15 placed inside the heat-exchange chamber 10 of the condenser 9 such that the combustion products E generated by the burner 3 will flow over its outer surface.

In order to maximise the heat-exchange area of the first secondary circuit 14 with the combustion products E, the second pipe 15 in the heat exchange chamber 10 may comprise one or more coils and the first secondary fluid F2 may consist of a liquid, e.g. water and/or glycol, or a gas, such as air.

Furthermore, a plurality of baffles 10' may be installed in the heat-exchange chamber 10 for increasing the turbulence of the combustion products E and further improve the efficiency of the plant 1.

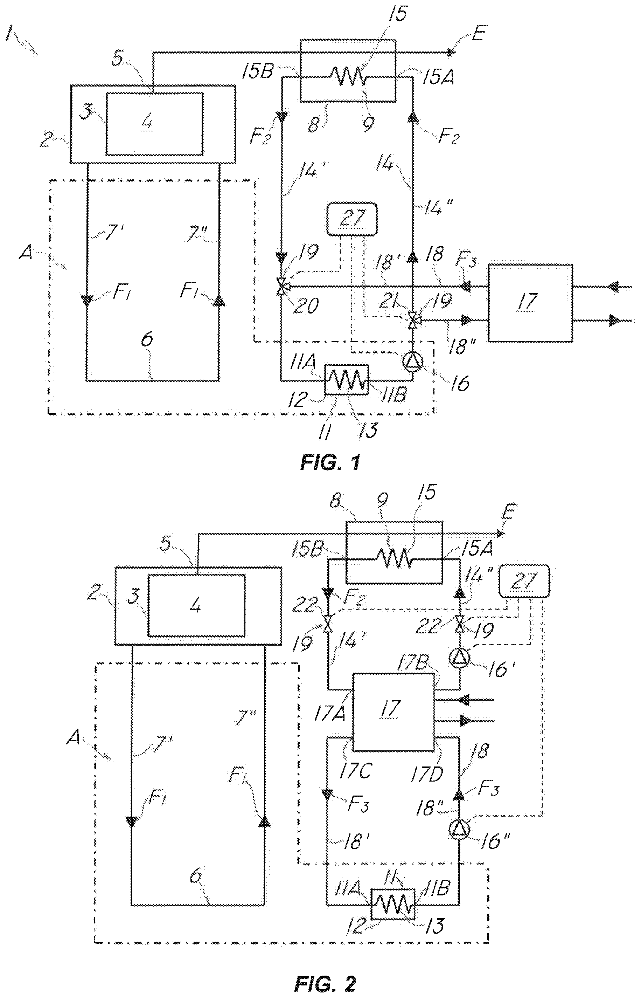

In a first embodiment as shown in FIG. 1, the first secondary circuit 14 may comprise a secondary delivery branch 14' for directly connecting the outlet 15B of the second pipe 15 to the inlet 11A of the second thermal device 11 and a secondary return branch 14' for directly connecting the outlet 11b of the second thermal device 11 to the inlet 15a of the second pipe 15.

Conveniently, the second thermal device 11 may be fluidically connected to the inlet 15a of the second pipe 15 with suitable pumping means 16 interposed therebetween, for pumping the first secondary fluid F2, which are located in the secondary return branch 14".

Alternatively and equivalently, the pumping means 16 may be placed on the delivery branch 14'.

These pumping means 16 may include either a pump or a similar device if the first secondary fluid F2 is a liquid, or a compressor or a similar device if the first secondary fluid F2 is a gas.

As shown in the figures, the plant 1 comprises a heat pump 17 having a second secondary circuit 18 containing a second secondary fluid F3, and operably connected to the second thermal device 11.

Advantageously, the heat pump 17 may be positioned either outside or inside the environment A to be air-conditioned, without departure from the scope of the present invention.

In a peculiar aspect of the invention, the closed circuit 6 and the second thermal device 11 are placed in the same environment A to be air conditioned and the heat pump 17 is adapted to selectively operate in heating or cooling mode.

Furthermore, the plant 1 comprises fluid connection means 19 for selectively connecting the second thermal device 11 with the first secondary circuit 14 and with the heat pump 17 for ambient heating in combination with the first thermal device 2.

The fluid connection means 19 are also configured to selectively connect the second thermal device 11 with the heat pump 17 for cooling the environment A.

As shown in the figures, the closed circuit 6 is fluidically independent from the first secondary circuit 14 and the second secondary circuit 18.

Thus, the second thermal device 11 in the environment A will heat the environment either in cooperation with the first thermal device 2 or independently, or cooling it.

Accordingly, the second device 11 connected to the heat pump 17 in heating mode may operate in combination with the first thermal device 2 for the plant 1 to heat the environment A with increased efficiency as compared with the operation of the first thermal device 2 alone.

Furthermore, if the environment A has a very high ceiling, like in industrial environments, this configuration prevents the creation of temperature stratifications thereby affording uniform and comfortable heating at people's level.

Alternatively, in the cooling mode, the heat pump 17 may operate to allow the plant 1, particularly the second thermal device 11, to independently cool the environment.

As is known per se, the heat pump 17 may be electrically or gas operated and may be configured to transfer thermal energy to the second secondary circuit 18 from a source external to the environment to be air conditioned. Thus, the heat pump 17 may be an air-to-water, water-to-water, air-to-air or water-to-air heat pump.

In addition, the heat pump 17 may be supplied with the power produced by renewable energy sources, such as solar, photovoltaic and geothermal power plants, produced in situ or distributed by the national supply mains.

In the first embodiment as schematically shown in FIG. 1, it may be appreciated that the first secondary circuit 14 is fluidically independent from the second secondary circuit 18 such that any failure in the operation of the heat pump 17 operating in heating mode will not impede the operation of the plant 1.

The connection means 19 may comprise a first three-way valve 20 which is adapted to connect the first 14 and the second 18 secondary circuits to the inlet 11A of the second thermal device 11, and a second three-way valve 21 configured for selective connection of the first 14 and of the second 18 secondary circuits to the outlet 11B of the second thermal device 11.

The first three-way valve 20 is connected to the delivery branch 14' of the first secondary circuit 14 and to a delivery branch 18' of the second secondary circuit 18, whereas the second three-way valve 21 is connected to the return branch 14" of the first secondary circuit 14 and to a return branch 18" of the second secondary circuit 18.

In this embodiment, when the plant 1 operates in heating mode, the means for connection 19 will be configured to mix and adjust the flow of the first secondary fluid F2 with the second secondary fluid F3 to improve the operating efficiency of operation of the second thermal device 11.

Alternatively, in the cooling mode the connection means 19 will be configured to stop the flow the first secondary fluid F2 and connect the second secondary circuit 18 to the inlet 11A and outlet 11B of the second thermal device 11.

In a second exemplary embodiment, not falling under the scope of the claims as schematically shown in FIG. 2, the heat pump 17 may be connected in series with the condenser 9 and the second heating device 11 and be interposed therebetween and may be in fluid communication with the first secondary circuit 14.

Namely, the delivery branch 14' of the first secondary circuit 14 will be adapted to directly connect the outlet 15B of the second pipe 15 to a first inlet 17a of the heat pump 17 and the return branch 14" of the first secondary circuit 14 will be adapted to directly connect a first outlet 17b of the heat pump 17 to the inlet 15A of the second pipe 15.

In addition, the delivery branch 18' of the second secondary circuit 18 will be adapted to connect the inlet 11A of the second thermal device 11 to a second outlet 17c of the heat pump 17, whereas the return branch 18" of the second secondary circuit 18 will be adapted to connect the outlet 11B of the second thermal device 11 to a second inlet 17D of the heat pump 17.

Conveniently, the connection means 19 may comprise one or more valves 22 located in the first secondary circuit 14 and configured to selectively connect the condenser 9 and the heat pump 17 when the latter is in the ambient heating mode.

The exemplary embodiment of FIG. 2 shows a first secondary circuit 14 comprising a pair of valves 22 located at the delivery branch 14 and the return branch 14" respectively.

In the cooling mode, the heat pump 17 may be connected to a high temperature source of thermal energy and the connection means 19 will be closed.

Moreover, in this exemplary embodiment, not falling under the scope of the claims the pumping means 16 may comprise a first pump 16 located in the return branch 14" of the first secondary circuit 14 and a second pump 16" located in the return branch 18" of the second secondary circuit 18.

Alternatively, the first 16' and second 16" pumps may be placed in the delivery branches 14', 18' of the first 14 and the second 18 secondary circuits respectively, as described for the first embodiment.

In a third embodiment, as schematically shown in FIG. 3, the plant 1 may comprise a heat accumulator 23 in fluid communication with the first 14 and the second 18 secondary circuits and connected to the second thermal device 11 for conveying the accumulated fluid F4, heated or cooled by the heat pump 17 or heated by the condenser 9, toward the second thermal device 11.

Namely, the delivery branch 14' of the first secondary circuit 14 will be adapted to directly connect the outlet 15B of the second pipe 15 to a first inlet 23A of the accumulator 23 and the return branch 14" of the first secondary circuit 14 will be adapted to directly connect a first outlet 23B of the accumulator 23 to the inlet 15A of the second pipe 15.

The delivery branch 18' of the second secondary circuit 18 will be adapted to connect the outlet 17C of the heat pump 17 to a second inlet 23C of the accumulator 23, whereas the return branch 18" of the second secondary circuit 18 will be adapted to connect a second outlet 23D of the accumulator 23 to an inlet 17D of the heat pump 17.

Furthermore, a third outlet 23e of the accumulator 23 may be connected to the inlet 11A of the second thermal device 11 via a delivery branch 24' of a third secondary circuit 24 whereas the outlet 11b of second thermal device 11 may be connected to a third inlet 23F of the accumulator 23 via a return branch 24" of the third secondary circuit 24.

Advantageously, the connection means 19 may comprise, for each secondary circuit 14, 18, at least two two-way valves 25, 26 for selectively connecting the condenser 9 or the heat pump 17 with the accumulator 23.

Alternatively, the heat pump 17 connected to the accumulator 23, by operation of the fluid connection means 19 can afford cooling of the environment. In the cooling mode the two-way valves 25 are closed, whereas the two-way valves 26 are open.

In this embodiment the pumping means 16 may comprise a first pump 16 located in the return branch 14" of the first secondary circuit 14 and a second pump 16" located in the return branch 24" of the third secondary circuit 24.

Alternatively, the first 16' and second 16" pumps may be placed in the delivery branches 14', 24' of the first 14 and the third 24 secondary circuits respectively.

Advantageously, and independently of the embodiments as described above, a casing, not shown, may be provided for enclosing two or more of the components of the plant 1, such as the first thermal device 2, the condenser 9, the heat pump 17, the accumulator 23 and the second heating device 11.

As is known per se, a control unit 27 may be provided, which is connected to the control devices of the burner 3, the heat pump 17, the pumping means 16 and the connection means 19, to adjust the mixture percentages of the first 14 and second 18 secondary circuits as well as the temperature of the environment A.

Alternatively, the control unit 27 may be also connected to the accumulator 23, in the case of the embodiment as shown in FIG. 3.

The control unit 27 may be operably connected to a plurality of temperature sensors, not shown, for measuring the outside temperature, the temperature of the environment A and/or the temperature of the first F1 and/or of the first F2 and the second F3 secondary fluids and/or the accumulated fluid F4, in the case of the embodiment with the accumulator 23.

Thus, the control unit 27 may control the overall operation of the plant 1 according to the temperature measurements made at various points thereof and may calculate the total efficiency of the plant 1 according to energy consumption and the use of renewable energy sources.

Moreover, the control unit 27 may stop fluid supply to the first 14 and/or of the second 18 secondary circuits in case of failure of the condenser 9 and the heat pump 17 respectively.

It will be appreciated from the foregoing that that ambient-air conditioning plant fulfils the intended objects and particularly affords efficient and uniform heating of an environment during the winter and cooling of the same environment during the summer.

### Industrial Applicability

The present invention may find application in industry, because it can be produced on an industrial scale in factories operating in the field of ambient air-condition for civil or industrial use.

## Claims

1. A hybrid plant (1) for ambient-air conditioning of an indoor environment (A) for civil or industrial use, which plant (1) comprises:
- at least one first thermal device (2) comprising a burner (3) which is adapted to heat a first working fluid (F1) contained in a closed circuit (6);
- a chimney (8) for ejecting the combustion products (E) of said burner (3);
- at least one second thermal device (11);
- at least one heat pump (17) having a second secondary circuit (18) containing a second secondary fluid (F3), and operably connected to said second thermal device (11);
wherein said chimney (8) comprises a condenser (9) for at least partial recovery of sensible and latent heat of evaporation of the combustion products (E);
wherein said condenser (9) comprises a first secondary circuit (14) containing a first secondary fluid (F2) and operably connected to said second thermal device (11) for at least partially returning the recovered heat to the environment (A) by means of the first secondary fluid (F2);
wherein said closed circuit (6) and said second thermal device (11) are placed in the same environment (A) to be air-conditioned, said heat pump (17) being adapted to selectively operate in heating or cooling mode, fluid connection means (19) being provided, for selectively connecting said second thermal device (11) with said first secondary circuit (14) and/or with said heat pump (17), and the condenser (9) for heating the environment (A) in combination with said first thermal device (2), or disconnecting it for allowing the heating of the environment (A) by means of the first thermal device (2) only, said fluid connection means (19) being further configured to selectively connect said second thermal device (11) with said heat pump (17) via the circuit (18) and disconnecting it from the condenser (9) either for cooling the environment (A) or heating it by means of the heating pump (17) only, said closed circuit (6) being fluidically independent from said first (14) and secondary (18) circuits.

2. A plant as claimed in claim 1, **characterised in that** said connection means (19) comprise a first three-way valve (20) which is adapted to connect or disconnect the first (14) and/or the second (18) secondary circuits to the inlet (11A) of said second thermal device (11), and a second three-way valve (21) configured to connect or disconnect the first (14) and/or the second (18) secondary circuits to the outlet (11B) of said second thermal device (11).

3. A plant as claimed in claim 1, **characterized in that** said heat pump (17) is adapted to be connected in series with said condenser (9) and said second thermal device (11) and is fluidically connected to said first secondary circuit (14).

4. A plant as claimed in claim 1, **characterized in that** said connection means (19) comprise one or more valves (22) located in the first secondary circuit (14) and configured to connect said condenser (9) and said heat pump (17) when the latter is in the ambient heating mode.

5. A plant as claimed in claim 1, **characterised in that** it comprises a heat accumulator (23) in fluid communication with said first (14) and second (18) secondary circuits and fluidically connected to said second thermal device (11) for conveying the accumulated fluid (F4), heated or cooled by said heat pump (17) or heated by said condenser (9), toward said second thermal device (11).

6. A plant as claimed in claim 5, **characterized in that** said connection means (19) comprise, for each secondary circuit (14, 18), at least two two-way valves (25, 26) for connecting said condenser (9) and said heat pump (17) with said accumulator (23).

7. A plant as claimed in claim 1, **characterised in that** said heat pump (17) is an air-to-water, water-to-water, air-to-air or water-to-air heat pump.

8. A plant as claimed in claim 1, **characterised in that** said condenser (9) comprises a heat-exchange chamber (10), said first secondary circuit (14) comprising a second pipe (15) located in said heat exchange chamber (10) such that the combustion products (E) generated by the burner (3) will flow over its outer surface.

9. A plant as claimed in claim 1, **characterised in that** it comprises a control unit (27) connected to said burner (3), said heat pump (17), said pumping means (16) and said connection means (19, 19') to adjust the temperature of the environment (A) to be air-conditioned, said control unit (27) being operably connected to a plurality of temperature sensors for measuring the temperature of the environment (A) and/or of the temperature of said working fluid (F1) and/or said first and second secondary fluids (F2, F3).

10. A plant as claimed in claim 9 in combination with claim 5, **characterised in that** said control unit is connected to said accumulator (23), to a plurality of temperature sensors for measuring the outside temperature and the temperature of said accumulated fluid (F4).

## Patentansprüche

1. Eine Hybridanlage (1) zur Klimatisierung einer Innenumgebung (A) für den zivilen oder industriellen Gebrauch, wobei die Anlage (1) umfasst:
- mindestens eine erste thermische Vorrichtung (2), die einen Brenner (3) umfasst, der zum Erhitzen eines in einem geschlossenen Kreislauf (6) enthaltenen ersten Arbeitsfluid (F1) geeignet ist;
- einen Schornstein (8) zum Ausstoßen der Verbrennungsprodukte (E) des Brenners (3);
- mindestens eine zweite thermische Vorrichtung (11);
- mindestens eine Wärmepumpe (17) mit einem zweiten Sekundärkreislauf (18), der ein zweites Sekundärfluid (F3) enthält und betriebsmäßig mit der zweiten thermischen Vorrichtung (11) verbunden ist;
wobei der Kamin (8) einen Kondensator (9) zur zumindest teilweisen Rückgewinnung der fühlbaren und latenten Verdampfungswärme der Verbrennungsprodukte (E) umfasst;
wobei der Kondensator (9) einen ersten Sekundärkreislauf (14) umfasst, der ein erstes Sekundärfluid (F2) enthält und betriebsmäßig mit der zweiten thermischen Vorrichtung (11) verbunden ist, um die zurückgewonnene Wärme mittels des ersten Sekundärfluids (F2) zumindest teilweise an die Umgebung (A) abzugeben;
wobei der geschlossene Kreislauf (6) und der zweiten thermischen Vorrichtung (11) in derselben zu klimatisierenden Umgebung (A) angeordnet sind, wobei die Wärmepumpe (17) so angepasst ist, dass sie wahlweise im Heiz- oder Kühlmodus arbeitet, wobei Fluidverbindungsmittel (19) vorgesehen sind, um der zweiten thermischen Vorrichtung (11) wahlweise mit dem ersten Sekundärkreislauf (14) und/oder mit der Wärmepumpe (17) und dem Kondensator (9) zu verbinden, um die Umgebung (A) in Kombination mit dem ersten Wärmegerät (2) zu heizen, oder es zu trennen, um das Heizen der Umgebung (A) nur mittels des zweiten thermischen Vorrichtung (2) zu ermöglichen, wobei die Fluidverbindungsmittel (19) ferner so konfiguriert sind, dass sie der zweiten thermischen Vorrichtung (11) wahlweise über den Kreislauf (18) mit der Wärmepumpe (17) verbinden und es vom Kondensator (9) trennen, entweder um die Umgebung (A) zu kühlen oder um sie nur mittels der Wärmepumpe (17) zu heizen, wobei der geschlossene Kreislauf (6) fluidisch unabhängig von den ersten (14) und Sekundärkreislauf (18) ist.

2. Anlage nach Anspruch 1, **dadurch gekennzeichnet, dass** die Verbindungsmittel (19) ein erstes Dreiwegeventil (20) umfassen, das dazu geeignet ist, den ersten (14) und/oder den zweiten (18) Sekundärkreislauf mit dem Einlass (11A) des zweiten thermischen Vorrichtung (11) zu verbinden oder davon zu trennen, und ein zweites Dreiwegeventil (21), das dazu geeignet ist, den ersten (14) und/oder den zweiten (18) Sekundärkreislauf mit dem Auslass (11B) des zweiten thermischen Vorrichtung (11) zu verbinden oder davon zu trennen.

3. Anlage nach Anspruch 1, **dadurch gekennzeichnet, dass** die Wärmepumpe (17) dazu geeignet ist, in Reihe mit dem Kondensator (9) und der zweiten thermischen Vorrichtung (11) verbunden zu werden und strömungstechnisch mit dem ersten Sekundärkreislauf (14) verbunden ist.

4. Anlage nach Anspruch 1, **dadurch gekennzeichnet, dass** die Verbindungsmittel (19) ein oder mehrere Ventile (22) umfassen, die sich im ersten Sekundärkreislauf (14) befinden und so konfiguriert sind, dass sie den Kondensator (9) und die Wärmepumpe (17) verbinden, wenn sich letztere im Umgebungsheizmodus befindet.

5. Anlage nach Anspruch 1, **dadurch gekennzeichnet, dass** sie einen Wärmespeicher (23) umfasst, der in Flüssigkeitsverbindung mit dem ersten (14) und zweiten (18) Sekundärkreislauf steht und flüssigkeitsmäßig mit der zweiten thermischen Vorrichtung (11) verbunden ist, um die gesammelte Flüssigkeit (F4), die von der Wärmepumpe (17) erwärmt oder gekühlt oder von dem Kondensator (9) erwärmt wird, zu der zweiten thermischen Vorrichtung (11) zu befördern.

6. Anlage nach Anspruch 5, **dadurch gekennzeichnet, dass** die Verbindungsmittel (19) für jeden Sekundärkreislauf (14, 18) mindestens zwei Zweiwegeventile (25, 26) zum Verbinden des Kondensators (9) und der Wärmepumpe (17) mit dem Speicher (23) umfassen.

7. Anlage nach Anspruch 1, **dadurch gekennzeichnet, dass** die Wärmepumpe (17) eine Luft-Wasser-, Wasser-Wasser-, Luft-Luft- oder Wasser-Luft-Wärmepumpe ist.

8. Anlage nach Anspruch 1, **dadurch gekennzeichnet, dass** der Kondensator (9) eine Wärmeaustauschkammer (10) umfasst, wobei der erste Sekundärkreislauf (14) ein zweites Rohr (15) umfasst, das in der Wärmeaustauschkammer (10) angeordnet ist, so dass die vom Brenner (3) erzeugten Verbrennungsprodukte (E) über seine Außenfläche fließen.

9. Anlage nach Anspruch 1, **dadurch gekennzeichnet, dass** sie eine Steuereinheit (27) umfasst, die mit dem Brenner (3), der Wärmepumpe (17), den Pumpmitteln (16) und den Verbindungsmitteln (19, 19') verbunden ist, um die Temperatur der zu klimatisierenden Umgebung (A) einzustellen, wobei die Steuereinheit (27) betriebsmäßig mit einer Vielzahl von Temperatursensoren zum Messen der Temperatur der Umgebung (A) und/oder der Temperatur des Arbeitsfluids (F1) und/oder des ersten und zweiten Sekundärfluid (F2, F3) verbunden ist.

10. Anlage nach Anspruch 9 in Kombination mit Anspruch, **dadurch gekennzeichnet, dass** die Steuereinheit mit dem Akkumulator (23) und mit einer Vielzahl von Temperatursensoren zum Messen der Außentemperatur und der Temperatur des angesammelten Fluids (F4) verbunden ist.

## Revendications

1. Installation hybride (1) pour la climatisation d'un environnement intérieur
(A) à usage civil ou industriel, laquelle installation (1) comprend :
- au moins un premier dispositif thermique (2) comprenant un brûleur (3) apte à chauffer un premier fluide de travail (F1) contenu dans un circuit fermé (6) ;
- une cheminée (8) pour l'éjection des produits de combustion (E) dudit brûleur (3) ;
- au moins un deuxième dispositif thermique (11) ;
- au moins une pompe à chaleur (17) ayant un deuxième circuit secondaire (18) contenant un deuxième fluide secondaire (F3), et fonctionnellement connectée à ce deuxième dispositif thermique (11) ;
dans laquelle ladite cheminée (8) comprend un condenseur (9) pour la récupération au moins partielle de la chaleur sensible et latente d'évaporation des produits de combustion (E) ;
dans lequel ledit condenseur (9) comprend un premier circuit secondaire (14) contenant un premier fluide secondaire (F2) et relié de manière opérationnelle audit deuxième dispositif thermique (11) pour renvoyer au moins partiellement la chaleur récupérée dans l'environnement (A) au moyen du premier fluide secondaire (F2) ;
dans lequel ledit circuit fermé (6) et ledit deuxième dispositif thermique (11) sont placés dans le même environnement (A) à climatiser, ladite pompe à chaleur (17) étant adaptée pour fonctionner sélectivement en mode chauffage ou refroidissement, des moyens de connexion de fluide (19) étant prévus pour connecter sélectivement ledit deuxième dispositif thermique (11) avec ledit premier circuit secondaire (14) et/ou avec ladite pompe à chaleur (17) et le condenseur (9) pour chauffer l'environnement (A) en combinaison avec ledit premier dispositif thermique (2), ou le déconnecter pour permettre le chauffage de l'environnement (A) au moyen du premier dispositif thermique (2) uniquement, ledit moyen de connexion de fluide (19) étant en outre configuré pour connecter sélectivement ledit deuxième dispositif thermique (11) avec ladite pompe à chaleur (17) via le circuit (18) et le déconnecter du condenseur (9) soit pour refroidir l'environnement (A), soit pour le chauffer au moyen de la pompe de chauffage (17) uniquement, ledit circuit fermé (6) étant fluidiquement indépendant desdits premier (14) et secondaire (18) circuits.

2. Installation selon la revendication 1, **caractérisée en ce que** lesdits moyens de raccordement (19) comprennent une première vanne trois voies (20) qui est adaptée pour connecter ou déconnecter le premier (14) et/ou le deuxième (18) circuit secondaire à l'entrée (11A) dudit deuxième dispositif thermique (11), et une deuxième vanne trois voies (21) configurée pour connecter ou déconnecter le premier (14) et/ou le deuxième (18) circuit secondaire à la sortie (11B) dudit deuxième dispositif thermique (11).

3. Installation selon la revendication 1, **caractérisée en ce que** ladite pompe à chaleur (17) est adaptée pour être connectée en série avec ledit condenseur (9) et ledit deuxième dispositif thermique (11) et est connectée fluidiquement audit premier circuit secondaire (14).

4. Installation selon la revendication 1, **caractérisée en ce que** lesdits moyens de connexion (19) comprennent une ou plusieurs vannes (22) situées dans le premier circuit secondaire (14) et configurées pour connecter ledit condenseur (9) et ladite pompe à chaleur (17) lorsque cette dernière est en mode chauffage ambiant.

5. Installation selon la revendication 1, **caractérisée en ce qu'**elle comprend un accumulateur de chaleur (23) en communication fluidique avec lesdits premier (14) et deuxième (18) circuits secondaires et relié fluidiquement audit deuxième dispositif thermique (11) pour acheminer le fluide accumulé (F4), chauffé ou refroidi par ladite pompe à chaleur (17) ou chauffé par ledit condenseur (9), vers ledit deuxième dispositif thermique (11).

6. Installation selon la revendication 5, **caractérisée en ce que** lesdits moyens de connexion (19) comprennent, pour chaque circuit secondaire (14, 18), au moins deux vannes à deux voies (25, 26) pour connecter ledit condenseur (9) et ladite pompe à chaleur (17) avec ledit accumulateur (23).

7. Installation selon la revendication 1, **caractérisée par le fait que** ladite pompe à chaleur (17) est une pompe à chaleur air-eau, eau-eau, air-air ou eau-air.

8. Installation selon la revendication 1, **caractérisée en ce que** ledit condenseur (9) comprend une chambre d'échange thermique (10), ledit premier circuit secondaire (14) comprenant un deuxième tuyau (15) situé dans ladite chambre d'échange thermique (10) de sorte que les produits de combustion (E) générés par le brûleur (3) s'écoulent sur sa surface extérieure.

9. Installation selon la revendication 1, **caractérisée en ce qu'**elle comprend une unité de contrôle (27) connectée audit brûleur (3), à ladite pompe à chaleur (17), audit moyen de pompage (16) et audit moyen de raccordement (19, 19') pour régler la température de l'environnement (A) à climatiser, ladite unité de contrôle (27) étant connectée de manière opérationnelle à une pluralité de capteurs de température pour mesurer la température de l'environnement (A) et/ou de la température dudit fluide de travail (F1) et/ou desdits premier et deuxième fluides secondaires (F2, F3).

10. Installation selon la revendication 9 en combinaison avec la revendication **caractérisée en ce que** l'unité de commande est connectée à l'accumulateur (23), à une pluralité de capteurs de température pour mesurer la température extérieure et la température du fluide accumulé (F4).
